# EUROPÄISCHE PATENTSCHRIFT

(11) **EP 2 389 509 B1**
(45) Veröffentlichungstag und Bekanntmachung des Hinweises auf die Patenterteilung: **22.08.2012**
(21) Anmeldenummer: 09801411.1
(22) Anmeldetag: 19.12.2009
(51) Int. Cl.: F03D 7/04, F03D 7/02

(54) **STATIONÄRE ENERGIEGEWINNUNGSANLAGE MIT EINER ABBREMSVORRICHTUNG**
STATIONARY ENERGY PRODUCTION PLANT HAVING A BRAKING DEVICE
INSTALLATION DE PRODUCTION D'ENERGIE STATIONNAIRE DOTEE D'UN DISPOSITIF DE FREINAGE

(30) Priorität: 24.01.2009 DE 102009006054
(43) Veröffentlichungstag der Anmeldung: 30.11.2011
(73) Patentinhaber: Robert Bosch GmbH, 70469 Stuttgart (DE)
(72) Erfinder: BUCHTALA, Boris, 75417 Muehlacker (DE); BERGER, Günter, 44577 Catrop-Rauxel (DE); SCHNURR, Bernd, 97816 Lohr-Sendelbach (DE)
(74) Vertreter: Thürer, Andreas
(86) Internationale Anmeldenummer: PCT/EP2009/009164
(87) Internationale Veröffentlichungsnummer: WO 2010/083866

(56) Entgegenhaltungen:
- DE-A1- 10 153 798
- GB-A- 2 206 930
- US-B1- 6 254 197

## Beschreibung

Die Erfindung betrifft eine Energiegewinnungsanlage mit einer Abbremsvorrichtung. Die Energiegewinnungsanlage weist mindestens einen über ein Fluid angetriebenen Rotor und einen mit dem Rotor gekoppelten Generator auf. Die Abbremsvorrichtung ist auf einer Welle des Antriebsstranges angeordnet.

Aus der Druckschrift DE 10 2004 057 729 A1 ist eine Bremseinrichtung zum Abbremsen eines Rotors einer Windenergieanlage bekannt. Die Bremseinrichtung hat zumindest einen hydraulisch betätigbaren Bremszylinder, dessen Bremsdruck mittels eines stetig verstellbaren Regelventils regelbar ist. Dazu weist die Bremseinrichtung eine Ablaufleitung von diesem Wegeventil zu einem Tank auf, wobei ein Sperrventil angeordnet ist, das ein leckagefreies Absperren des Druckmittelstrompfades zum Tank ermöglicht.

Eine derartige Bremseinrichtung löst die Aufgabe zum Abbremsen eines Rotors einer Windenergieanlage, um eine leckagedichte Absperrung eines hydraulisch betätigbaren Bremszylinders zu gewährleisten. Dadurch soll eine sichere Bremsdruck- oder Bremslüftungsdruckmodulation mit hoher Genauigkeit möglich werden, so dass ein sanftes Abbremsen des Rotors sichergestellt ist.

Eine derartige Bremseinrichtung hat den Nachteil, dass sie Notsituationen, in denen ein Rotor einer Windkraftanlage in kürzest möglicher Zeit abzubremsen ist, nicht gerecht wird. Vielmehr wird durch das sanfte Abbremsen ein Abbremsvorgang vorgesehen, der theoretisch einem aperiodischen Grenzfall nahe kommt, da jedes Überschwingen unterdrückt wird, indem die Bremskraft so dosiert wird, dass ein steiler Drehmomentanstieg, wie es in Notsituationen zum Abbremsen eines . Rotors einer Windkraftanlage in kürzester Zeit erforderlich wäre, mit einer derartigen Bremseinrichtung nicht realisierbar ist.

Um bei herkömmlichen Windkraftanlagen den Rotor in einer Notsituation abzubremsen, führt das Einfallen der Bremse aufgrund der rotierenden hohen Massen zu einem Drehmomentanstieg im Antriebsstrang, der das statische Bremsmoment überschreitet. Um diese Spitzen der Torsionsmomente beim Abbremsen eines Rotors in einer Notsituation durch den Antriebsstrang aufnehmen zu können, müssen die im Leistungsfluss liegenden Komponenten des Antriebsstranges der Energiegewinnungsanlage entsprechend überdimensioniert werden, so dass derartige Spitzendrehmomente nicht zur Beschädigung der Energiegewinnungsanlage führen. Aufgrund der bei einer derartigen Notabbremsung auftretenden Torsionsschwingungen wird bei herkömmlichen Energiegewinnungsanlagen das Übersetzungsgetriebe auf das drei- bis vierfache der Betriebsbelastung ausgelegt, was bei Windkraftanlagen nachteilig zu erheblichen Gewichten in der Generatorgondel führt.

Die US 6,254,197 B1 offenbart ein hydraulisches Bremssystem sowie ein Verfahren zur Steuerung des hydraulischen Bremssystems für eine stationäre Energiegewinnungsanlage, insbesondere für Windkraftanlagen, Fördersysteme und dergleichen. Die Steuerung des hydraulischen Bremssystems wirkt auf den Antriebsstrang ein, indem eine Begrenzung des durch die Bremsanlage eingeleiteten Torsionsmoment erfolgt. Somit wird die Bremskraft also durch die Steuerung verringert, wenn ein maximaler Torsionswert erreicht wird. Auf welche Weise diese Wirkung erzielt werden soll, ist allerdings nicht offenbart.

Aufgabe der Erfindung ist es, eine stationäre Energiegewinnungsanlage mit einer Abbremsvorrichtung zu schaffen, die bei deutlich vermindertem Gewicht der Komponenten des Antriebsstranges eine sichere und kurzzeitige Notabschaltung des Rotors ermöglicht.

Diese Aufgabe wird mit dem Gegenstand des unabhängigen Anspruchs 1 gelöst. Vorteilhafte Weiterbildungen ergeben sich aus den abhängigen Ansprüchen.

Erfindungsgemäß wird eine stationäre Energiegewinnungsanlage mit einer Abbremsvorrichtung geschaffen. Die Energiegewinnungsanlage weist mindestens einen aerodynamisch angetriebenen Rotor und einen mit dem Rotor gekoppelten Generator auf. Die Abbremsvorrichtung ist auf einer Welle des Antriebsstranges angeordnet. Die Abbremsvorrichtung wirkt mit einem Steuergerät zusammen, wobei bei Annäherung an einen vorgegebenen Torsionsschwellwert das Steuergerät die Abbremskraft der Abbremsvorrichtung verringert.

Diese Lösung hat den Vorteil, dass die Abbremsvorrichtung mit Volllast auf den Abtriebsstrang einwirken kann. Da eine derartige Energiegewinnungsanlage ein schwingungsfähiges Gebilde ist, führt dieser Einsatz der Abbremsvorrichtung mit Volllast, d.h. mit höchstmöglicher Bremsstärke und höchstmöglichem Bremsmoment, zu einem steilen Anstieg der Torsionsmomente in den Wellen des Antriebsstranges. Um dennoch ein Überschwingen über das zulässige maximale Torsionsmoment einer kritischen Welle des Antriebsstranges zu vermeiden, wird ein Überschwingen des Momentes überwacht und im Fall der Annäherung an den vorgegebenen Torsionsschwellwert die Bremskraft kurz vor Erreichen des Überschwingzustands auf eine Minimallast der Rotorbremsvorrichtung vermindert. Da sich für diesen Fall die ausbildende Torsionseigenfrequenz durch das Massenträgheitsmoment und die Steifigkeit des Antriebsstranges vom Rotor bis zur Abbremsvorrichtung bestimmt, lässt sich daraus auch die Zeitspanne Δt bestimmen, nach der die Abbremsvorrichtung wieder mit Volllast gefahren werden kann.

Dazu wertet das Steuergerät Signale von mindestens einem Sensorelement zur Torsionsmomenterfassung einer kritischen Welle des Antriebsstranges aus. Dabei wird das Bremsmoment der Abbremsvorrichtung vermindert, wenn der vorgegebene Torsionsschwellenwert in Bezug auf ein zulässiges Torsionsmoment einer kritischen Welle des Antriebsstranges erreicht wird.

Im Gegensatz zu der aus dem Stand der Technik bekannten sanften Abbremsmethode wird hier über das eingesetzte Steuergerät die Möglichkeit gegeben, deutlich kurzfristiger den Rotor einer Energiegewinnungsanlage in einer Notsituation zum Stehen zu bringen. Dazu kann die Abbremsvorrichtung eine auf der Abtriebswelle eines Übersetzungsgetriebes angeordnete Bremsscheibe aufweisen, die mit Bremsbacken zusammenwirkt, deren Bremskraft durch den Schwellwert in Bezug auf das zulässige Torsionsmoment T_{zul} mindestens der Abtriebswelle des Übersetzungsgetriebes begrenzt ist. Grundsätzlich ist es jedoch auch möglich, eine der Übersetzungswellen des Übersetzungsgetriebes oder auch die Antriebswelle selbst derart zu dimensionieren, dass diese maßgebend für den Schwellwert des zulässigen Torsionsmomentes T_{zul} wird.

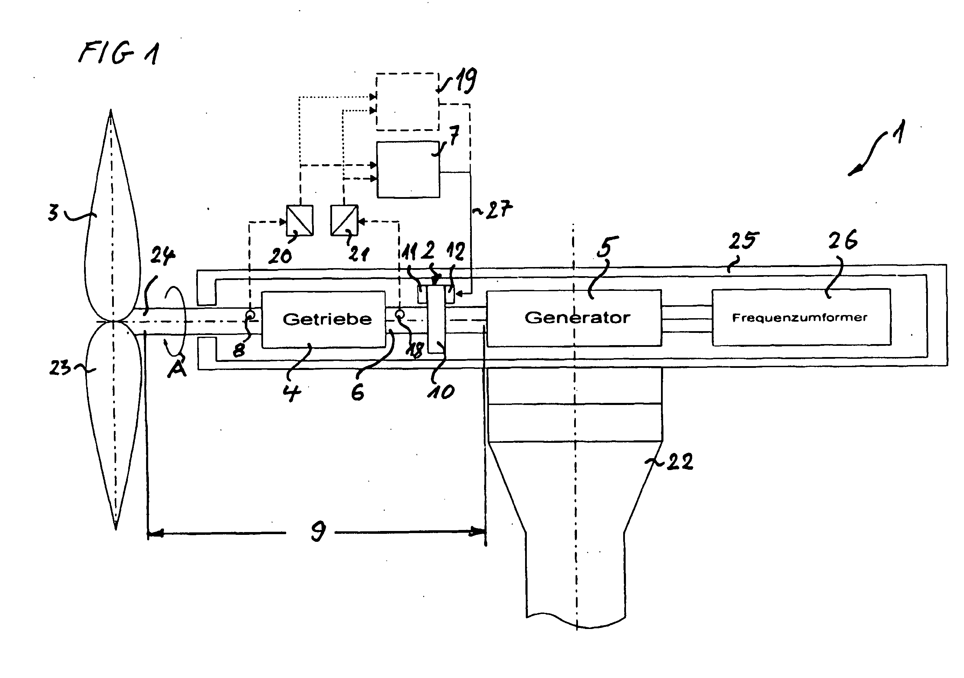

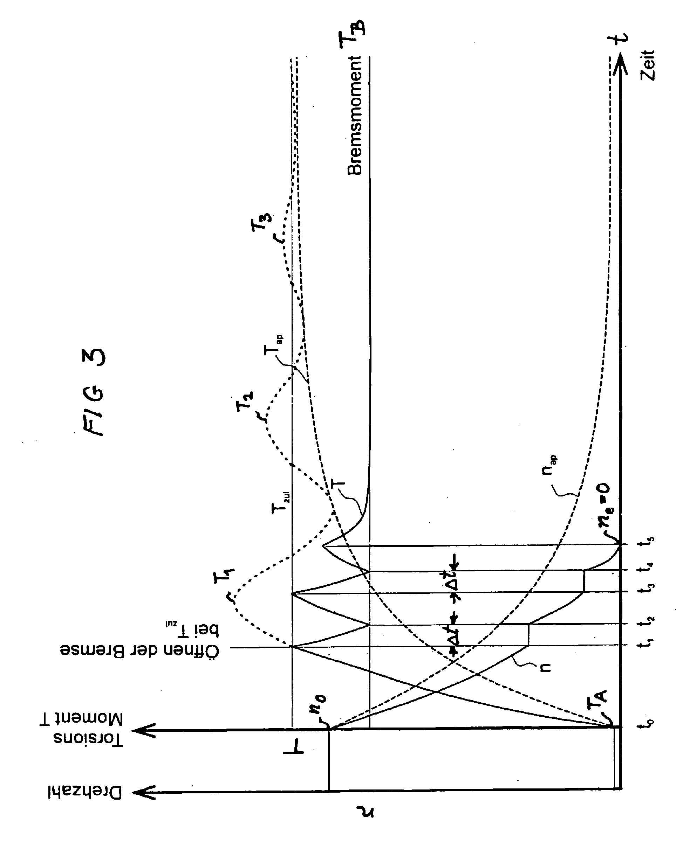

Vorzugsweise ist die stationäre Energiegewinnungsanlage eine Windenergieanlage, die auch WEA- bzw. WKA (Windkraftanlage) genannt und mit den Figuren 1 und 3 näher erläutert wird.

Vorzugsweise ist vor dem Erreichen des Schwellwertes in Bezug auf das zulässige Torsionsmoment T_{zul} der kritischen Welle die Bremskraft der Abbremsvorrichtung auf Volllast oberhalb des aperiodischen Grenzfalls gestellt und bei Erreichen des Schwellwertes ist die Bremskraft auf Minimallast heruntergefahren. Eine Bremskraft vorzusehen, die bei Volllast oberhalb des aperiodischen Grenzfalls eingestellt ist, hat den Vorteil, dass ein deutlich steilerer Abfall der Drehzahl des Rotors erreicht werden kann, als es bei einem aperiodischen Grenzfall oder bei einer aus dem Stand der Technik bekannten sanften Abbremsung erreichbar ist.

Vorzugsweise weist die Energiegewinnungsanlage mehrere Sensorelemente zur Torsionsmomentenerfassung unterschiedlicher Wellen des Antriebsstranges auf. Wie bereits oben erwähnt, kann sich der Schwellwert für die Bremskraft nicht nur auf die Abtriebswelle des Übersetzungsgetriebes beziehen, auf dem die Bremsscheibe der Abbremsvorrichtung angeordnet ist, sondern auch auf eine der anderen Wellen, die beispielsweise als Übersetzungswellen im Übersetzungsgetriebe angeordnet sind oder als Antriebswelle zwischen Rotor und Getriebe dienen. In solchen Fällen sind die Sensorelemente zur Erfassung des Torsionsmomentes an diesen Wellen zu positionieren oder es ist ein entsprechendes Modell im Steuergerät zu speichern, das aus der Torsionsmomentendifferenz zwischen Antriebswelle und Abtriebswelle für das Getriebe auf den Zustand bzw. die Torsionsbelastung der übrigen Wellen schließen lässt. Dazu kann das Steuergerät eine Wertetabelle aufweisen, welche die zulässigen Torsionsmomente T_{zul} der Wellen des Antriebsstranges von dem Rotor bis zur Abtriebswelle des Übersetzungsgetriebes aufweist.

Zur Steuerung der Bremskraft kann die Abbremsvorrichtung hydraulische Steuerventile aufweisen, wie sie bereits aus dem Stand der Technik gemäß DE 10 2004 057 739 A1 bekannt sind, jedoch wird in der Rotationsabbremsvorrichtung gemäß dem Stand der Technik die Bremskraft bzw. das Bremsmoment für eine Notabbremsung des Rotors über einen entsprechenden Aktor deutlich höher eingestellt. Außerdem ist es vorgesehen in einer entsprechenden alternativen Ausführungsform der Erfindung, dass die Abbremsvorrichtung zur Steuerung der Bremskraft pneumatische Steuerventile aufweist. Schließlich ist es auch möglich, die Steuerung der Bremskraft mit Hilfe elektromechanischer Stellglieder für die Abbremsvorrichtung vorzusehen.

Die Steuereinheit kann separat als Zusatzgerät oder Nachrüstsatz für eine Energiegewinnungsanlage vorgesehen werden oder in einer zentralen Steuereinheit der stationären Energiegewinnungsanlage integriert sein. Da eine zentrale Steuereinheit über eine Vielzahl von Sensoren und Sensorsignalen, insbesondere zur Höhe der Torsionsbelastungen, in dem Antriebsstrang verfügt, kann in einem solchen Fall auf separate Sensoren für die Abbremsvorrichtung verzichtet werden.

In eine Ausführungsform ist das Steuergerät zum Einstellen der Bremskraft in Abhängigkeit eines vorgegebenen Zeitprogramms eingerichtet. Damit ist es auch möglich, die Bremseinrichtung in sensorlos und gesteuert zu betreiben. Weil die Torsionseigenfrequenz des Antriebsstrangs in vielen Windenergieanlagen bekannt sind, lässt sich der Bremsvorgang auch ohne Sensor hinreichend genau zeitlich steuern.

In einer Ausführungsform ist das Steuergerät zum Variieren des Zeitprogramm in Abhängigkeit der Drehzahl des Rotors eingerichtet ist. Dies bedeutet, dass bei unterschiedlichen Drehzahlen unterschiedliche Zeitprogramme abgefahren werden.

Ebenso wird in einer anderen Ausführung das Steuergerät zum Variieren des Zeitprogramms in Abhängigkeit der Windlast eingerichtet.

Ein Verfahren zur Schnellabbremsung eines Rotors einer Energiegewinnungsanlage weist die nachfolgenden Verfahrensschritte auf. Zunächst werden die zulässigen Trägheitsmomente in einem Antriebsstrang einer Energiegewinnungsanlage von einem Rotor über ein Übersetzungsgetriebe bis zu der Abbremsvorrichtung ermittelt. Daraus wird eine kritische Welle in dem Antriebsstrang zwischen Rotor und Abbremsvorrichtung definiert. Ein Sensorelement wird derart angeordnet, dass mindestens das Torsionsmoment der kritischen Welle beim Abbremsen erfasst und überwacht wird.

Unter diesen Voraussetzungen kann nun ein Anfahren der Abbremsvorrichtung mit Volllast erfolgen, wobei diese Volllast höher als die Bremskraft beim aperiodischen Grenzfall ist, bis ein Überschwingen bevorsteht. Dann wird die Abbremsvorrichtung auf Minimallast gesteuert, sobald ein Schwellwert in Bezug auf ein zulässige Torsionsmoment T_{zul} der kritischen Welle erreicht ist. Schließlich wird dieser Minimalwert beibehalten, bis unter Berücksichtigung von Masseträgheitsmoment und Steifigkeit des Antriebsstranges zwischen Rotor und Abbremsvorrichtung ein erneuter Volllastbetrieb der Abbremsvorrichtung zulässig ist.

Dieses Verfahren hat den Vorteil, dass in deutlich kürzeren Zeitabständen ein Abbremsen des Rotors möglich wird, selbst wenn die Komponenten in dem Antriebsstrang in ihrer Steifigkeit und ihrem Masseträgheitsmoment deutlich reduziert sind. Dieses hat den weiteren Vorteil, dass eine hohe Gewichtseinsparung für beispielsweise das Übersetzungsgetriebe und eventuell auch für die Antriebs- und die Abtriebswelle des Übersetzungsgetriebes möglich wird.

Zur Steuerung der Bremskraft kann ein hydraulisches oder pneumatisches oder elektromechanisches System eingesetzt werden. Ferner ist bei dem Verfahren vorgesehen, die Bremskraft der Abbremsvorrichtung mindestens an den Schwellwert in Bezug auf das zulässige Torsionsmoment T_{zul} der Abtriebswelle des Übersetzungsgetriebes anzupassen. Auch können mehrere Wellen der Energiegewinnungsanlage mittels mehrerer Sensorelemente zur Torsionsmomentenerfassung des Antriebsstranges überwacht werden.

Vorzugsweise wird bei Erreichen eines der Schwellwerte aus einer in dem Steuergerät gespeicherten Wertetabelle, welche die zulässigen Torsionsmomente T_{zul} der Wellen des Antriebsstranges von dem Rotor bis zur Abtriebswelle des Übersetzungsgetriebes speichert, das Steuergerät die Volllast der Abbremsvorrichtung auf Minimallast reduzieren. Außerdem ist für eine bevorzugte Durchführungsform des Verfahrens vorgesehen, dass vor dem Erreichen des Schwellwertes in Bezug auf das zulässige Torsionsmoment T_{zul} der kritischen Welle die Bremskraft der Abbremsvorrichtung auf Volllast oberhalb des aperiodischen Grenzfalls eingestellt wird und erst bei Erreichen des Schwellwertes die Bremskraft auf Minimallast umgestellt wird.

Die Erfindung wird nun anhand der nachfolgenden Figuren näher erläutert.
- Figur 1: zeigt eine Prinzipskizze einer stationären Energiegewinnungsanlage gemäß einer Ausführungsform der Erfindung;
- Figur 2: zeigt ein Schema mit Funktionsblöcken eines Steuergeräts für eine Abbremsvorrichtung der Energiegewinnungsanlage gemäß Figur 1;
- Figur 3: zeigt ein schematisches Diagramm einer Abschaltung eines Rotors der Energiegewinnungsanlage gemäß Figur 1.

Figur 1 zeigt eine Prinzipskizze einer stationären Energiegewinnungsanlage 1 gemäß einer Ausführungsform der Erfindung. Die Energiegewinnungsanlage 1 setzt mechanische Energie eines Rotors 3 über mechanische Komponenten und einen Generator in elektrische Energie um, die mit Hilfe eines Frequenzumsetzers beispielsweise an eine Last oder ein Netz abgegeben wird. Ein derartiger Rotor 3 weist im Gegensatz zu dem hier gezeigten Rotor Dimensionen auf, die es erforderlich machen, die Energiegewinnungsanlage auf einem Turm 22 anzuordnen. Dabei ist der Rotor 3 mit seinen Rotorblättern 23 der Windkraft ausgesetzt, die eine Antriebswelle 24 in Pfeilrichtung A in Rotation versetzt.

Diese Rotation in einem Frequenzspektrum von einigen Zehntel Hz bis einigen Zehn Hz wird über ein Übersetzungsgetriebe 4, das in einer Gondel 25 zusammen mit einem nachgeschalteten Generator 5 und einem Frequenzumrichter 26 angeordnet ist, auf eine deutlich höhere Rotationsfrequenz übersetzt. Das Übersetzungsgetriebe 4 kann dabei Rotationsfrequenzen einer Abtriebswelle 6 zwischen einigen Zehn Hz und einigen Hundert Hz erreichen und damit den Generator antreiben. In Folge dieser Übersetzung kann die Abtriebswelle 6 einen deutlich geringeren Durchmesser und damit ein geringeres Flächenträgheitsmoment aufweisen als die Antriebswelle 24. Ferner kann eine Abbremsvorrichtung 2 mit einer Bremsscheibe 10 auf der Abtriebswelle 6 deutlich kleiner dimensioniert werden, als wenn eine derartige Abbremsvorrichtung im Bereich der Antriebswelle 24 angeordnet ist. Die Übersetzungswellen und Zahnräder des Übersetzungsgetriebes 4 müssen jedoch entsprechend dimensioniert werden, um die auf die Bremsscheibe 10 über die Bremsbacken 11 und 12 einwirkenden Bremskräfte der Abbremsvorrichtung 2 übertragen zu können. Dabei darf ein maximal zulässiges Torsionselement T_{zul} für eine dieser Wellen nicht überschritten werden.

Um eine kurzzeitige Notabbremsung für den Rotor 3 zu gewährleisten, ist ein Steuergerät 7 vorgesehen, das die Bremskraft, welche auf die Bremsbacken 11 und 12 und damit auf die Bremsscheibe 10 wirkt, vorgibt. Dieses Steuergerät 7 kann elektronisch gespeichert eine Schwellwerttabelle aufweisen, welche die Schwellwerte in Bezug auf das jeweils maximal zulässige Torsionsmoment der einzelnen Komponenten und Wellen im Antriebsstrang 9 dieser Energiegewinnungsanlage 1 aufweist. Beim Einsetzen der Abbremsvorrichtung 2 durch das Steuergerät 7 wird zunächst, um ein kurzzeitiges Abbremsen zu erreichen, mit einem höchstmöglichen Bremsmoment gearbeitet, das über pneumatische, hydraulische oder elektrische Zuleitungen 27 von dem Steuergerät 7 aus eingestellt wird.

Gleichzeitig wird mit Hilfe der Sensoren 8 und 18 das Torsionsmoment zwischen Antriebswelle 24 und Abtriebswelle 6 überwacht, das beim Einsetzen des Bremsvorganges steil ansteigt. Vor Erreichen eines Überschwingfalles, der durch die Sensoren 8 und 18 mit Hilfe der Signalwandler 20 und 21 erfasst wird, kann die Abbremsvorrichtung 2 über die Zuleitungen 27 durch das Steuergerät 7 auf Minimallast umgestellt werden. Aus Sicherheitsgründen ist es in dieser Ausführungsform der Erfindung vorgesehen, ein redundantes Steuergerät 19, das mit den Sensoren 8 und 18 zusammenwirkt und die Zuleitungen 27 versorgen kann, vorgesehen. Sollte das Steuergerät 7 ausfallen, so kann das redundante Steuergerät 19 für eine Notbremsung des Rotors 3 sorgen.

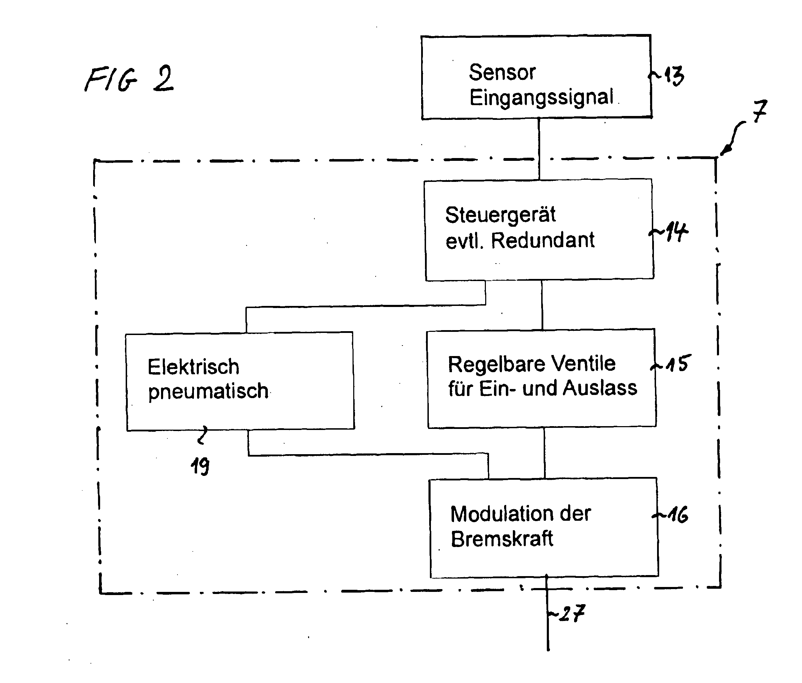

Figur 2 zeigt ein Schema mit Funktionsblöcken 13 bis 17 des Steuergeräts 7 für eine Abbremsvorrichtung 2 der Energiegewinnungsanlage 1 gemäß Figur 1. Der Block 13 liefert das Sensoreingangssignal in das Steuergerät 7. Dabei kann der Block 14 aus zwei Steuergeräten, wie es die Figur 1 zeigt, bestehen und ein Steuergerät 7 und ein redundantes Steuergerät 19 aufweisen. Der Funktionsblock 16 gibt an die Zuleitungen 27 die entsprechende Modulation der Bremskraft aus, wobei das Steuergerät des Funktionsblockes 14 über den Funktionsblock 19 elektrisch oder pneumatisch diese Bremskraftmodulation hervorruft oder über den Funktionsblock 15, in dem regelbare Ventile für Ein- und Auslass vorgesehen sind, die Modulation der Bremskraft im Funktionsblock 16 bewirkt, so dass diese über die Zuleitungen 27 an die in Figur 1 gezeigte Abbremsvorrichtung 2 einwirken kann.

Figur 3 zeigt ein schematisches Diagramm einer Abschaltung eines Rotors der Energiegewinnungsanlage gemäß Figur 1. Auf der Abszisse ist die Zeit t aufgetragen. Ferner ist für dieses Diagramm eine Ordinate für die Drehzahl n und eine weitere Ordinate für das Torsionsmoment T vorgesehen. Zum Zeitpunkt t₀ rotiert der Rotor der Energiegewinnungsanlage mit einer Drehzahl n, während das Torsionsmoment dem Antriebsmoment T_{A} entspricht. Dieses Antriebsmoment T_{A} kann durch Drehen der Rotationsblätter in eine Segelstellung bei einer Notabschaltung minimiert werden.

Wird ein sanftes Abschalten bzw. Abbremsen durchgeführt, das jegliches Überschwingen vermeidet, so ergibt sich ein relativ langer Zeitraum bis das maximal zulässige Torsionsmoment T_{zul} während eines so genannten aperiodischen Grenzfalles erreicht wird, wobei gleichzeitig ein erhebliches Zeitintervall erforderlich ist, um die Rotorblätter zum Stehen zu bringen, wie es die Kurve für die aperiodische Drehzahl nₐₚ zeigt. Um schneller und deutlich kürzer in einer Notabschaltung den Rotor zum Stehen zu bringen, wird bei den herkömmlichen Anlagen ein Überschwingen der schwingungsfähigen Energiegewinnungsanlage in Kauf genommen. Dann muss jedoch auch diese Anlage die Torsionsspitzen T₁, T₂ und T₃ schadlos überstehen, die sich bei derartigen Schnellabschaltungen einer schwingungsfähigen Energiegewinnungsanlage aufbauen können.

Um ein kurzfristiges Abschalten zwischen t₀ und t₅ zu erreichen, wobei die Drehzahl von einer Anfangsdrehzahl n₀ auf eine Enddrehzahl nₑ = 0 des Rotors abfällt, wird die erfindungsgemäße Abbremsvorrichtung zunächst mit Volllast angefahren, so dass im Zeitpunkt t₁ das maximal zulässige Torsionsmoment T_{zul} einer kritischen Welle im Antriebsstrang erreicht wird. In diesem Augenblick t₁ wird durch das Steuergerät die Abbremsvorrichtung für eine Zeitspanne Δt beispielsweise durch Öffnen der Bremse auf Minimallast gefahren.

Diese Zeitspanne Δt lässt sich aus der sich ausbildenden Torsionsfrequenz durch das Massenträgheitsmoment bestimmen, so dass nach dem Zeitintervall Δt zum Zeitpunkt t₂ die Abbremsvorrichtung wieder auf Volllast gestellt werden kann, wobei zwischen t₂ und t₃ die Drehzahl weiter absinkt, bis schließlich erneut bei t₃ das maximal zulässige Torsionsmoment T_{zul} erreicht ist und wiederum die Abbremsvorrichtung für einen Zeitraum Δt auf Minimallast gefahren wird, bis schließlich nach dem Zeitintervall Δt beim Zeitpunkt t₄ die Abbremsvorrichtung erneut auf Volllast geschaltet wird, bis im Zeitpunkt t₅ die Drehzahl auf Null abgesunken ist und beibehalten bleibt.

Dieses Diagramm zeigt, dass die Drehzahlkurve mit der Drehzahl n deutlich unter dem aperiodischen Grenzfall bleibt und innerhalb der kurzen Zeitspanne von t₀ und t₅ den Rotor zum Stehen bringt, was mit einer sanften Abbremsvorrichtung nicht erreichbar ist.

### Bezugszeichenliste

- 1: Energiegewinnungsanlage
- 2: Abbremsvorrichtung
- 3: Rotor
- 4: Übersetzungsgetriebe
- 5: Generator
- 6: Abtriebswelle
- 7: Steuergerät
- 8: Sensorelement
- 9: Antriebsstrang
- 10: Bremsscheibe
- 11: Bremsbacke
- 12: Bremsbacke
- 13: Funktionsblock
- 14: Funktionsblock
- 15: Funktionsblock
- 16: Funktionsblock
- 17: Funktionsblock
- 18: Sensorelement
- 19: redundantes Steuergerät
- 20: Signalwandler bzw. Signalverstärker
- 21: Signalwandler bzw. Signalverstärker
- 22: Turm
- 23: Rotorblatt
- 24: Antriebswelle
- 25: Gondel
- 26: Frequenzumrichter
- 27: Zuleitung

- A: Pfeilrichtung
- T_{zul}: maximal zulässiges Torsionsmoment
- T_{B}: Bremsmoment
- Δt: Zeitspanne der Minimallast
- t: Zeit

## Patentansprüche

1. Stationäre Energiegewinnungsanlage mit einer Abbremsvorrichtung (2), wobei die Energiegewinnungsanlage (1) den über ein Fluid angetriebenen Rotor (3) und einen mit dem Rotor gekoppelten Generator (5) aufweist, und wobei die Abbremsvorrichtung (2) auf einer Welle des Antriebsstranges (9) angeordnet ist und mit einem Steuergerät (7) zusammenwirkt, wobei bei Annäherung an einen Torsionsschwellwert das Steuergerät (7) die Bremskraft der Abbremsvorrichtung (2) verringert,
**dadurch gekennzeichnet,**
**dass** das Steuergerät Signale von mindestens einem Sensorelement (8) zur Torsionsmomenterfassung einer kritischen Welle des Antriebsstranges (9) auswertet, wobei ein Schwellwert in Bezug auf ein zulässiges Torsionsmoment (T_{zul}) der kritischen Welle für das Bremsmoment (T_{B}) der Abbremsvorrichtung (2) vorgegeben ist.

2. Energiegewinnungsanlage nach Anspruch 1,
**dadurch gekennzeichnet,**
**dass** die Abbremsvorrichtung (2) eine auf der Abtriebswelle (6) eines Übersetzungsgetriebes (4) angeordnete Bremsscheibe (10) aufweist, die mit Bremsbacken (11, 12) zusammenwirkt, deren Bremskraft durch den Schwellwert in Bezug auf das zulässige Torsionsmoment (T_{zul}) mindestens der Abtriebswelle (6) des Übersetzungsgetriebes (4) begrenzt ist.

3. Energiegewinnungsanlage nach Anspruch 2,
**dadurch gekennzeichnet,**
**dass** vor dem Erreichen des Schwellwertes in Bezug auf das zulässige Torsionsmoment (T_{zul}) der kritischen Welle die Bremskraft der Abbremsvorrichtung (2) auf Volllast oberhalb des aperiodischen Grenzfalls (Tₐₚ) gestellt ist und bei Erreichen des Schwellwertes die Bremskraft auf Minimallast gestellt ist.

4. Energiegewinnungsanlage nach einem der Ansprüche 1 bis 3,
**dadurch gekennzeichnet,**
**dass** die Energiegewinnungsanlage (1) mehrere Sensorelemente (8, 18) zur Torsionsmomenterfassung des Antriebsstranges (9) aufweist.

5. Energiegewinnungsanlage nach einem der vorhergehenden Ansprüche,
**dadurch gekennzeichnet,**
**dass** das Steuergerät (7) eine Wertetabelle aufweist, welche die zulässigen Torsionsmomente (T_{zul}) der Wellen des Antriebsstranges (9) von dem Rotor (3) bis zur Abtriebswelle (6) des Übersetzungsgetriebes (4) aufweist.

6. Energiegewinnungsanlage nach einem der vorhergehenden Ansprüche,
**dadurch gekennzeichnet,**
**dass** die Zeitspanne Δt für die Anwendung einer Minimallast im Bremssystem von dem Massenträgheitsmoment und der Steifigkeit des Antriebsstranges (9) vom Rotor (3) bis zur Abbremsvorrichtung (2) durch die sich ausbildende Torsionsfrequenz bestimmt ist.

7. Energiegewinnungsanlage nach einem der vorhergehenden Ansprüche,
**dadurch gekennzeichnet,**
**dass** die Abbremsvorrichtung (2) zur Steuerung der Bremskraft hydraulische Steuerventile aufweist.

8. Energiegewinnungsanlage nach einem der vorhergehenden Ansprüche,
**dadurch gekennzeichnet,**
**dass** die Abbremsvorrichtung (2) zur Steuerung der Bremskraft pneumatische Steuerventile aufweist.

9. Energiegewinnungsanlage nach einem der vorhergehenden Ansprüche,
**dadurch gekennzeichnet,**
**dass** die Abbremsvorrichtung (2) zur Steuerung der Bremskraft elektromechanische Stellglieder aufweist.

10. Energiegewinnungsanlage nach einem der vorhergehenden Ansprüche,
**dadurch gekennzeichnet, dass**
das Steuergerät zum Einstellen der Bremskraft in Abhängigkeit eines vorgegebenen Zeitprogramms eingerichtet ist.

11. Energiegewinnungsanlage nach Anspruch 10,
**dadurch gekennzeichnet, dass**
das Steuergerät zum Variieren des Zeitprogramm in Abhängigkeit der Drehzahl des Rotors eingerichtet ist.

12. Energiegewinnungsanlage nach Anspruch 10,
**dadurch gekennzeichnet, dass**
das Steuergerät zum Variieren des Zeitprogramms in Abhängigkeit der Windlast eingerichtet ist.

13. Verfahren zur Schnellabbremsung einer Energiegewinnungsanlage (1), wobei
- die zulässigen Trägheitsmomente der Wellen in einem Antriebsstrang (9) einer Energiegewinnungsanlage (1) von einem Rotor (3) bis zu der Abbremsvorrichtung (2) ermittelt werden;
- eine kritische Welle in dem Antriebsstrang (9) zwischen Rotor (3) und Abbremsvorrichtung (2) definiert wird;
- ein Sensorelement (8) derart angeordnet wird, dass mindestens das Torsionsmoment (T_{zul}) der kritischen Welle beim Abbremsen erfasst wird;
- die Abbremsvorrichtung (2) mit Volllast, die höher als die Bremskraft beim aperiodischen Grenzfall ist, angefahren wird, bis ein Überschwingen bevorsteht, und
- die Abbremsvorrichtung (2) auf Minimallast steuert, sobald ein Schwellwert in Bezug auf ein zulässiges Torsionsmoment der kritischen Welle erreicht ist und
- die Minimallast beibehalten wird, bis unter Berücksichtigung von Masseträgheitsmoment und Steifigkeit des Antriebsstranges zwischen Rotor (3) und Abbremsvorrichtung (2) einen Volllastbetrieb der Abbremsvorrichtung (2) erneut zugelassen wird.

14. Verfahren nach Anspruch 13,
**dadurch gekennzeichnet,**
**dass** die Steuerung der Bremskraft mittels eines hydraulischen oder pneumatischen oder elektromechanischen Systems erfolgt.

15. Verfahren nach Anspruch 13 oder Anspruch 14,
**dadurch gekennzeichnet,**
**dass** die Bremskraft der Abbremsvorrichtung (2) mindestens an den Schwellwert in Bezug auf das zulässige Torsionsmoment (T_{zul}) der Abtriebswelle (6) eines Übersetzungsgetriebes (4) angepasst wird.

16. Verfahren nach Anspruch 15,
**dadurch gekennzeichnet,**
**dass** mehrere Wellen der Energiegewinnungsanlage (1) mittels mehrerer Sensorelemente (8, 18) zur Torsionsmomenterfassung des Antriebsstranges (9) überwacht werden.

17. Verfahren nach Anspruch 16,
**dadurch gekennzeichnet,**
**dass** bei Erreichen eines der Schwellwerte aus der Wertetabelle, welche die zulässigen Torsionsmomente (T_{zul}) der Wellen des Antriebsstranges (9) von dem Rotor (3) bis zur Abtriebswelle (6) des Übersetzungsgetriebes (4) speichert, das Steuergerät (7) die Volllast der Abbremsvorrichtung (2) auf Minimallast steuert.

18. Verfahren nach einem der Ansprüche 13 bis 17,
**dadurch gekennzeichnet,**
**dass** vor dem Erreichen des Schwellwertes in Bezug auf das zulässige Torsionsmoment (T_{zul}) der kritischen Welle die Bremskraft der Abbremsvorrichtung (2) auf Volllast oberhalb des aperiodischen Grenzfalls (Tₐₚ) eingestellt wird und erst bei Erreichen des Schwellwertes die Bremskraft auf Minimallast umgestellt wird.

## Claims

1. Stationary energy production plant having a braking device (2), wherein the energy production plant (1) has the rotor (3) which is driven by means of a fluid and a generator (5) which is coupled to the rotor, and wherein the braking device (2) is arranged on a shaft of the drive train (9) and interacts with a control device (7), wherein, when a torsion threshold value is approached, the control device (7) reduces the braking force of the braking device (2),
**characterized**
**in that** the control device evaluates signals of at least one sensor element (8) for sensing the torsion torque of a critical shaft of the drive train (9), wherein a threshold value is predefined with respect to a permissible torsion torque (Tₚₑᵣₘ) of the critical shaft for the braking torque (T_{B}) of the braking device (2).

2. Energy production plant according to Claim 1,
**characterized**
**in that** the braking device (2) has a brake disc (10) which is arranged on the output shaft (6) of a speed reduction gearbox (4) and which interacts with brake callipers (11, 12) whose braking force is limited by the threshold value with respect to the permissible torsion torque (Tₚₑᵣₘ) at least of the output shaft (6) of the speed reduction gearbox (4).

3. Energy production plant according to Claim 2,
**characterized**
**in that**, before the threshold value for the permissible torsion torque (Tₚₑᵣₘ) of the critical shaft is reached, the braking force of the braking device (2) is set to full load above the aperiodic limiting case (Tₐₚ), and when the threshold value is reached the braking force is set to a minimum load.

4. Energy production plant according to one of Claims 1 to 3,
**characterized**
**in that** the energy production plant (1) has a plurality of sensor elements (8, 18) for detecting the torsion torque of the drive train (9).

5. Energy production plant according to one of the preceding claims, **characterized in that** the control device (7) has a value table which has the permissible torsion torques (Tₚₑᵣₘ) of the shafts of the drive train (9) from the rotor (3) to the output shaft (6) of the speed reduction gearbox (4).

6. Energy production plant according to one of the preceding claims,
**characterized**
**in that** the time period Δt for the application of a minimum load in the brake system is determined by the moment of mass inertia and the rigidity of the drive train (9) from the rotor (3) to the braking device (2) by the torsion frequency which is formed.

7. Energy production plant according to one of the preceding claims,
**characterized**
**in that** the braking device (2) has hydraulic control valves for controlling the braking force.

8. Energy production plant according to one of the preceding claims,
**characterized**
**in that** the braking device (2) has pneumatic control valves for controlling the braking force.

9. Energy production plant according to one of the preceding claims,
**characterized**
**in that** the braking device (2) has electromechanical actuator elements for controlling the braking force.

10. Energy production plant according to one of the preceding claims,
**characterized in that**
the control device is configured to set the braking force as a function of a predefined time programme.

11. Energy production plant according to Claim 10,
**characterized in that**
the control device is configured to vary the time programme as a function of the rotational speed of the rotor.

12. Energy production plant according to Claim 10,
**characterized in that**
the control device is configured to vary the time programme as a function of the wind load.

13. Method for rapid braking of an energy production plant (1), wherein
- the permissible moments of inertia of the shafts in a drive train (9) of an energy production plant (1) from a rotor (3) to the braking device (2) are determined;
- a critical shaft in the drive train (9) between the rotor (3) and the braking device (2) is defined;
- a sensor element (8) is arranged in such a way that at least the torsion torque (Tₚₑᵣₘ) of the critical shaft is sensed during braking;
- the braking device (2) is started with full load, which is higher than the braking force in the aperiodic limiting case, until harmonics are imminent, and
- the braking device (2) is adjusted to minimum load as soon as a threshold value for a permissible torsion torque of the critical shaft is reached, and
- the minimum load is maintained until a full load operating mode of the braking device (2) is permitted again taking into account the moment of mass inertia and the rigidity of the drive train between the rotor (3) and the braking device (2).

14. Method according to Claim 13,
**characterized**
**in that** the braking force is controlled by means of a hydraulic or pneumatic or electromechanical system.

15. Method according to Claim 13 or Claim 14,
**characterized**
**in that** the braking force of the braking device (2) is adapted at least to the threshold value for the permissible torsion torque (Tₚₑᵣₘ) of the output shaft (6) of a speed reduction gearbox (4).

16. Method according to Claim 15,
**characterized**
**in that** a plurality of shafts of the energy production plant (1) are monitored by means of a plurality of sensor elements (8, 18) for sensing the torsion torque of the drive train (9).

17. Method according to Claim 16,
**characterized**
**in that**, when one of the threshold values from the value table which stores the permissible torsion torque (Tₚₑᵣₘ) of the shafts of the drive train (9) from the rotor (3) to the output shaft (6) of the speed reduction gearbox (4) is reached, the control device (7) adjusts the full load of the braking device (2) to minimum load.

18. Method according to one of Claims 13 to 17,
**characterized in that**
before the threshold value for the permissible torsion torque (Tₚₑᵣₘ) of the critical shaft is reached, the braking force of the braking device (2) is set to full load above the aperiodic limiting case (Tₐₚ), and the braking force is not adjusted to minimum load until the threshold value is reached.

## Revendications

1. Installation de captage d'énergie stationnaire équipée d'un dispositif de freinage (2), l'installation de captage d'énergie (1) comportant le rotor (3) entraîné par un fluide et un générateur (5) couplé au rotor et le dispositif de freinage (2) étant disposé sur un arbre de la chaîne d'entraînement (9) et interagissant avec un appareil de commande (7), l'appareil de commande (7) réduisant la force de freinage du dispositif de freinage (2) à l'approche d'une valeur seuil de torsion, **caractérisé en ce que** l'appareil de commande analyse les signaux d'au moins un élément de détection (8) pour détecter le couple de torsion d'un arbre critique de la chaîne d'entraînement (9), une valeur seuil étant prédéfinie par rapport à un couple de torsion admis (T_{zul}) de l'arbre critique pour le couple de freinage (T_{B}) du dispositif de freinage (2).

2. Installation de captage d'énergie selon la revendication 1, **caractérisée en ce que** le dispositif de freinage (2) comporte un disque de frein (10) disposé sur l'arbre d'entraînement en sortie (6) d'un engrenage réducteur (4) interagissant avec les patins de freinage (11, 12) dont la force de freinage est limitée par la valeur seuil par rapport à au couple de torsion admis (T_{zul}) de l'arbre d'entraînement en sortie (6) au moins de l'engrenage réducteur (4).

3. Installation de captage d'énergie selon la revendication 2, **caractérisée en ce qu'**avant d'atteindre la valeur seuil par rapport au couple de torsion admis (T_{zul}) de l'arbre critique, la force de freinage du dispositif de freinage (2) est réglée en pleine charge au-dessus du cas limite apériodique (Tₐₚ) et que lorsque la valeur seuil est atteinte, la force de freinage est réglée en charge minimale.

4. Installation de captage d'énergie selon l'une quelconque des revendications 1 à 3, **caractérisée en ce que** l'installation de captage d'énergie (1) comprend plusieurs éléments de détection (8, 18) servant à détecter le couple de torsion de la chaîne d'entraînement (9).

5. Installation de captage d'énergie selon l'une quelconque des revendications précédentes, **caractérisée en ce que** l'appareil de commande (7) comporte un tableau de valeurs comportant les couples de torsion admis (T_{zul}) des arbres de la chaîne d'entraînement (9) du rotor (3) jusqu'à l'arbre d'entraînement en sortie (6) de l'engrenage réducteur (4).

6. Installation de captage d'énergie selon l'une quelconque des revendications précédentes, **caractérisée en ce que** l'intervalle de temps Δt servant à l'application d'une charge minimale dans le système de freinage est définie par la fréquence de torsion ainsi formée par le couple d'inertie de masse et la rigidité de la chaîne d'entraînement (9) du rotor (3) jusqu'au dispositif de freinage (2).

7. Installation de captage d'énergie selon l'une quelconque des revendications précédentes, **caractérisée en ce que** le dispositif de freinage (2) comporte des soupapes de commande hydrauliques pour commander la force de freinage.

8. Installation de captage d'énergie selon l'une quelconque des revendications précédentes, **caractérisée en ce que** le dispositif de freinage (2) comporte des soupapes de commande pneumatiques pour commander la force de freinage.

9. Installation de captage d'énergie selon l'une quelconque des revendications précédentes, **caractérisée en ce que** le dispositif de freinage (2) comporte des éléments de réglage électromécaniques pour commander la force de freinage.

10. Installation de captage d'énergie selon l'une quelconque des revendications précédentes, **caractérisée en ce que** l'appareil de commande est agencé pour régler la force de freinage en fonction d'un programme de temps prédéfini.

11. Installation de captage d'énergie selon la revendication 10, **caractérisée en ce que** l'appareil de commande est agencé pour faire varier le programme de temps en fonction de la vitesse de rotation du rotor.

12. Installation de captage d'énergie selon la revendication 10, **caractérisée en ce que** l'appareil de commande est agencé pour faire varier le programme de temps en fonction de la charge de vent.

13. Procédé de freinage rapide d'une installation de captage d'énergie (1) :
- les couples d'inertie admis des arbres présents dans une chaîne d'entraînement (9) d'une installation de captage d'énergie (1) étant calculés d'un rotor (3) jusqu'au dispositif de freinage (2) ;
- un arbre critique dans la chaîne d'entraînement (9) étant défini entre le rotor (3) et le dispositif de freinage (2) ;
- un élément de détection (8) étant disposé de façon à détecter au moins le couple de torsion (T_{zul}) de l'arbre critique lors du freinage ;
- le dispositif de freinage (2) étant actionné en pleine charge, supérieure à la force de freinage appliquée au cas limite apériodique, jusqu'à ce qu'un dépassement ne se produise ; et
- le dispositif de freinage (2) commande le passage en charge minimale dès qu'une valeur seuil est atteinte par rapport à un couple de torsion admis de l'arbre critique ; et
- la charge minimale étant maintenue jusqu'à ce que le couple d'inertie de masse et la rigidité de la chaîne d'entraînement prévue entre le rotor (3) et le dispositif de freinage (2) pris en compte autorisent à nouveau un fonctionnement en pleine charge du dispositif de freinage (2).

14. Procédé selon la revendication 13, **caractérisé en ce que** la commande de la force de freinage se produit à l'aide d'un système hydraulique ou pneumatique ou électromécanique.

15. Procédé selon la revendication 13 ou la revendication 14, **caractérisé en ce que** la force de freinage du dispositif de freinage (2) est au moins adaptée à la valeur seuil par rapport au couple de torsion admis (T_{zul}) de l'arbre d'entraînement en sortie (6) d'un engrenage réducteur (4).

16. Procédé selon la revendication 15, **caractérisé en ce que** plusieurs arbres de l'installation de captage d'énergie (1) sont surveillés à l'aide de plusieurs éléments de détection (8, 18) servant à détecter le couple de torsion de la chaîne d'entraînement (9).

17. Procédé selon la revendication 16, **caractérisé en ce que** lorsqu'une des valeurs seuil du tableau de valeurs mémorisant les couples de torsion admis (T_{zul}) des arbres de la chaîne d'entraînement (9) du rotor (3) jusqu'à l'arbre d'entraînement en sortie (6) de l'engrenage réducteur (4) est atteinte, l'appareil de commande (7) commande le passage de la pleine charge du dispositif de freinage (2) à la charge minimale.

18. Procédé selon l'une quelconque des revendications 13 à 17, **caractérisé en ce qu'**avant d'atteindre la valeur seuil par rapport au couple de torsion admis (T_{zul}) de l'arbre critique, la force de freinage du dispositif de freinage (2) est réglée en pleine charge au-dessus du cas limite apériodique (Tₐₚ) et que ce n'est que lorsque la valeur seuil est atteinte que la force de freinage est basculée en charge minimale.
